# EUROPÄISCHE PATENTSCHRIFT

(11) **EP 1 854 816 B1**
(45) Veröffentlichungstag und Bekanntmachung des Hinweises auf die Patenterteilung: **14.03.2012**
(21) Anmeldenummer: 07008474.4
(22) Anmeldetag: 26.04.2007
(51) Int. Cl.: C08G 18/08, C08G 18/70, C08G 18/80, C09D 175/04

(54) **Wässrige Dispersionen mit bimodaler Teilchengrössenverteilung**
Aqueous dispersions with bimodal particle size distribution
Dispersions liquides à répartition granulométrique bimodale

(30) Priorität: 09.05.2006 DE 102006021728
(43) Veröffentlichungstag der Anmeldung: 14.11.2007
(73) Patentinhaber: Bayer MaterialScience AG, 51368 Leverkusen (DE)
(72) Erfinder: Dörr, Sebastian, Dr., 40597 Düsseldorf (DE); Mazanek, Jan, Dr., 51051 Köln (DE); Blum, Harald, Dr., 51375 Leverkusen (DE); Müller, Heino, 51375 Leverkusen (DE)

(56) Entgegenhaltungen:
- WO-A1-2005/023947
- DE-A1- 10 106 566
- DE-A1- 19 907 988

## Beschreibung

Die Erfindung betrifft wässrige, selbstvernetzende Einkomponenten (1K)-PUR-Dispersionen, die sowohl einen Grobanteil als auch einen Feinanteil aufweisen, ein Verfahren zur deren Herstellung und ihre Verwendung zur Herstellung festkörperreiche Einbrennlacke.

Bei der Beschichtung von Substraten werden zunehmend wässrige Bindemittel, insbesondere Polyurethan-Polyharnstoff (PUR)-Dispersionen verwendet. Die Herstellung von wässrigen PUR-Dispersionen ist grundsätzlich aus dem Stand der Technik bekannt.

PUR-Dispersionen zeichnen im Gegensatz zu vielen anderen wässrigen Bindemittelklassen vor allem durch eine hohe Beständigkeit gegenüber Chemikalien und Wasser, eine hohe mechanische Belastbarkeit sowie eine hohe Zugfestigkeit und Dehnbarkeit aus. Diese Anforderungen werden weitgehend von Polyurethan-Polyharnstoff Dispersionen des Standes der Technik erfüllt. Die dort genannten Systeme sind aufgrund hydrophiler Gruppen selbstemulgierend, können ohne Zuhilfenahme externer Emulgatoren in Wasser dispergiert werden und besitzen eine monomodale Teilchengrößenverteilungen. Damit die Viskosität dieser Dispersionen in einem für anwendungstechnische Belange in einem vertretbarem Rahmen bleibt, sind diese üblicherweise mit Festkörpergehalten zwischen 30 und 45 Gew.-% Festkörperanteil im Handel erhältlich.

In den letzten Jahren sind weitere Verbesserungen der eingesetzten Einkomponenten(1K)-Einbrennlacke erzielt worden, wie z.B. in der EP-A 0 576 952, in der Kombinationen aus wasserlöslichen oder in Wasser dispergierbaren Polyhydroxyverbindungen mit in Wasser löslichen oder dispergierbaren blockierten Polyisocyanaten beschrieben werden oder wie in der DE-A 199 30 555, in der Kombinationen aus einer in Wasser dispergierbaren urethangruppenhaltigen, hydroxyfunktionellen Bindemittelkomponente, einer in einem mehrstufigen Verfahren über zwei Prepolymerisierungsschritte hergestellten Bindemittelkomponente mit blockierten Isocyanatgruppen, einem Aminoplast und weiteren Komponenten offenbart werden. Nachteilig an diesen Einkomponenten-Systemen ist, dass die vorher hergestellten Komponenten einen zusätzlichen Mischungsschritt benötigen. Die erzielten Festkörperanteile liegen jedoch in den beschriebenen Systemen im Allgemeinen deutlich unter 50%. Dies ist ein Nachteil in Hinblick auf die Kosten z.B. bei Transport und Lagerung. Weiterhin ist die weitere Formulierung von Lackmischungen eingeschränkt, wenn kein ausreichend hoher Festkörper erzielt wird.

Von einem modernen, wässrigen Lack wird ein möglichst hoher Festkörpergehalt gefordert. Dies geschieht zum einen aus Gründen der Energieeinsparung, beispielsweise durch reduzierte Transportkosten und geringerem Wärmebedarf für das Verdampfen des Wassers beim Aushärten solcher Bindemittel, zum anderen können damit in der Regel günstigere Applikations- bzw. Filmeigenschaften wie z.B. höhere erzielbare Schichtstärken erreicht werden.

Trockenfilmschichtstärken von 50 bis 70 µm sind mit wässrigen Bindemitteln in der Regel nur schwer erreichbar, da bei solchen, für wässrige Bindemittel relativ hohen Schichtstärken eine starke Neigung zur Bildung von Kochblasen, Kratern und anderen Filmstörungen besteht. Üblicherweise werden diese Störungen durch Zugabe von flüchtigen Hochsiedern, organischen Hilfslösemitteln oder ähnlichen Zusätzen beseitigt bzw. reduziert. Andererseits geht damit jedoch ein Teil der Umweltverträglichkeit der wässrigen Bindemittel wieder verloren.

Die bislang im Handel verfügbaren festkörperreichen PUR-Dispersionen genügen vielfach den geforderten Ansprüchen nicht. Sie werden allgemein über hohe Mengen an externen Emulgatoren stabilisiert, besitzen breit verteilte monomodale Teilchengrößenverteilungen und hohe mittlere Teilchengrößen. Sie können daher oft nur durch den Zusatz von Verdicken vor Sedimentation geschützt werden. Die Eigenschaftsprofile dieser festkörperreichen Dispersionen liegen daher deutlich unterhalb des geforderten Niveaus. Es bestand daher Bedarf nach verbesserten Dispersionen mit hohem Festkörpergehalt.

In der WO-A 02/070615 werden bimodale wässrige Polymer-Dispersionen mit zwei diskreten Teilchengrößenmaxima vorgestellt. In den Beispielen wird ausschließlich die Herstellung von primären Polyacrylatdispersionen mit bimodaler Teilchengrößenverteilung beschrieben. Die Herstellung der Bimodalität erfolgt zweistufig, die resultierenden Produkte eignen sich insbesondere zur Papierbeschichtung.

In der WO-A 03/064534 wird die Herstellung von bimodalen Polyurethandispersionen auf Basis von zwei verschieden hydrophilierten Polyurethandispersionen beschrieben. Die hydrophile feinteilige Dispersion wird mit der hydrophoberen grobteiligen Dispersion gemischt und anschließend der Festkörper der resultierenden bimodalen Dispersion durch partielles Entfernen des Wassers im Vakuum erhöht. Nachteilig ist an diesem beschriebenen Verfahren, dass es sehr aufwendig und im technischen Maßstab mit hohen Kosten verbunden ist.

Die Dispersionen nach dem Stand der Technik erfüllen damit nicht alle Anforderungen der Anwender, insbesondere nicht bezüglich des Festkörpergehaltes und der einfachen Herstellung.

Die Aufgabe der vorliegenden Erfindung bestand daher in der Bereitstellung einer festkörperreichen wässrigen, selbstvernetzenden 1K-PUR-Dispersion, die sich, bei akzeptablen Viskositäten, auf hohe Feststoffanteile einstellen lässt und bei Lackanwendungen gute Eigenschaften bezüglich Lackhärte, Resistenz gegenüber Lösemitteln und Lackoptik aufweist. Des Weiteren sollte ein Verfahren zur Herstellung solcher Dispersionen bereitgestellt werden, welches die einfache Herstellung dieser Dispersionen ermöglicht.

Es wurde nun gefunden, dass eine Dispersion, die als Grobanteil [G] Polyurethan-Polyharnstoff-Teilchen und als Feinanteil [F] Vernetzer-Teilchen in einer bimodalen Teilchengrößenverteilung aufweist, die oben genannten Anforderungen erfüllt.

Gegenstand der vorliegenden Erfindung sind somit wässrige, selbstvernetzende Einkomponenten(1K)-Polyurethan-Dispersionen mit einer bimodalen Teilchengrößenverteilung, die zwei separate Maxima aufweisen, wobei der Feinanteil [F] der Vernetzer-Teilchen im Bereich von 1 bis 100 nm, bevorzugt 2 bis 70 nm, besonders bevorzugt 5 bis 50 nm und der Grobanteil [G] der Polyurethan-Polyharnstoff-Teilchen im Bereich von 10 bis 400 nm, bevorzugt 15 bis 250 nm und besonders bevorzugt 15 bis 200 nm liegt und das Gewichtsverhältnis zwischen Fein- und Grobanteil zwischen 0,5/99,5 und 10/90, bevorzugt 2/98 und 8/92, besonders bevorzugt 3/97 und 6/94 liegt.

Die erfindungsgemäßen Dispersionen weisen einen Festkörpergehalt von 40 bis 70 Gew.-%, bevorzugt von 45 bis 65 Gew.-%, besonders bevorzugt von 50 bis 60 Gew.-% auf, wobei die Viskosität der Dispersion zwischen 50 und 20000 mPas, bevorzugt zwischen 100 und 10000 mPas, besonders bevorzugt zwischen 2000 und 7000 mPas (23°C) liegt.

Geeignete Vernetzer-Teilchen, die den Feinanteil [F] der erfindungsgemäßen Dispersion darstellen sind hydrophilierte Polyisocyanate. Die wässrige Dispersion bzw. Lösung der Polyisocyanat-Teilchen werden hergestellt durch Umsetzung von
a) einer Polyisocyanatkomponente,
b) 50 bis 90 Äquivalent-%, bezogen auf die isocyanatreaktiven Gruppen, eines thermisch abspaltbaren Blockierungsmittels,
c) 10 bis 45 Äquivalent-%, bezogen auf die isocyanatreaktiven Gruppen, einer Hydroxycarbonsäure als Hydrophilierungsmittel und
d) 0 bis 15 Äquivalent-%, bezogen auf die isocyanatreaktiven Gruppen, einer mindestens difunktionellen Kettenverlängerungskomponente,
wobei vor, während oder nach der Dispergierung des Polyurethan-Polymers in Wasser die Carbonsäuregruppen der Hydroxycarbonsäure mit einer Base e) neutralisiert werden.

Die Mengenverhältnisse der Reaktionspartner werden bevorzugt so gewählt, dass das Äquivalent-Verhältnis der Isocyanatkomponente a) zu gegenüber Isocyanat reaktionsfähigen Gruppen der Komponenten b), c) und d) bei 1:0,7 bis 1:1,3 liegt.

Es ist möglich, ein Lösemittel wie beispielsweise N-Methylpyrrolidon, N-Ethylpyrrolidon, Methoxypropyalcetat, Aceton und/oder Methylethylketon dem Gemisch zuzugeben. Nach Abschluss der Reaktion und Dispergierung können flüchtige Lösemittel wie Aceton und/oder Methylethylketon durch Destillation entfernt werden. Bevorzugt ist die Verwendung von N-Methylpyrrolidon oder N-Ethylpyrrolidon.

Als Polyisocyanate werden dazu in a) die dem Fachmann an sich bekannten NCO-funktionellen Verbindungen einer Funktionalität von ≥ (größer gleich) 2 eingesetzt. Dies sind typischerweise aliphatische, cycloaliphatische, araliphatische und/oder aromatische Di- oder Triisocyanate sowie deren höhermolekulare Folgeprodukte mit Urethan-, Allophanat-, Biuret-, Uretdion- und/oder Isocyanuratgruppen, die zwei oder mehr freie NCO-Gruppen aufweisen.

Bevorzugte Di- oder Polyisocyanate sind Tetramethylendiisocyanat, Cyclohexan-1,3- und 1,4-diisocyanat, Hexamethylendiisocyanat (HDI), 1-Isocyanato-3,3,5-trimethyl-5-isocyanato-methylcyclohexan (Isophorondiisocyanat, IPDI), Methylen-bis-(4-isocyanatocyclohexan), Tetramethylxylylendiisocyanat (TMXDI), Triisocyanatononan, Toluylendiisocyanat (TDI), Di-phenylmethan-2,4'-und/oder 4,4'-diisocyanat (MDI), Triphenylmethan-4,4'-diiso-cyanat, Naphtylen-1,5-diisocyanat, 4-Isocyanatomethyl-1,8-octandiisocyanat (Nonantriisocyanat, Triisocyanatononan, TIN) und/oder 1,6,11-Undecantriisocyanat sowie deren beliebige Mischungen.

Geeignete Polyisocyanate haben typischerweise Isocyanatgehalte von 0,5 bis 50 Gew.-%, bevorzugt von 3 bis 30 Gew.-%, besonders bevorzugt von 5 bis 25 Gew.-%.

Bevorzugte Polyisocyanate a) zur Herstellung der hydrophilierten Polyisocyanat-Teilchen (I) entsprechen der vorstehend genannten Art und weisen Biuret-, Iminooxadiazindion,- Isocyanurat- und/oder Uretdiongruppen auf und basieren bevorzugt dabei auf Hexamethylendiisocyanat, Isophorondiisocyanat und/oder 4,4'-Diisocyanatodicyclohexylmethan.

Geeignete Blockierungsmittel b) sind beispielsweise ε-Caprolactam, Malonsäurediethylester, Acetessigsäureethylester, Oxime wie z.B. Butanonoxim, Amine wie z.B. N,N-Diisopropylamin oder N,N-tert.-Butylbenzylamin, Esteramine wie Alkylal-aninester, Dimethylpyrazol, Triazol bzw. Gemische und ggf. auch weitere Blockierungsmittel. Bevorzugt sind Butanonoxim, Diisopropylamin, 3,5-Dimethylpyrazol, N-tert.-Butylbenzylamin und/oder deren Gemische, besonders bevorzugt ist Butanonoxim.

Beispiele für Hydroxycarbonsäuren c) sind Mono- und Dihydroxycarbonsäuren, wie 2-Hydroxyessigsäure, 3-Hydroxypropansäure, 12-Hydroxy-9-octadecansäure (Rizinolsäure), Hydroxypivalinsäure, Milchsäure, Dimethylolbuttersäure und/oder Dimethylolpropionsäure. Bevorzugt sind Hydroxypivalinsäure, Milchsäure und/oder Dimethylolpropionsäure, besonders bevorzugt ist Hydroxypivalinsäure.

Zusätzlich zu der Hydrophilierung durch mindestens eine Hydroxycarbonsäure können noch geeignete nichtionisch hydrophilierend wirkende Verbindungen eingesetzt werden Dies sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch verzweigte Polyether.

Geeignete nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylen-oxideinheiten aufweisen.

Als Kettenverlängerungskomponente d) kommen beispielsweise Di-, Tri- und/oder Polyole in Betracht. Beispiele sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Di-hydroxycyclohexan, 1,4-Dimethylolcyclohexan, Octandiol-1,8, Decandiol-1,10, Dodecandiol-1,12, Trimethylolpropan, Rizinusöl, Glycerin und/oder Gemische der genannten Produkten. Auch ethoxilierte und/oder propoxilierte Di-, Tri- und/oder Polyole wie z.B. ethoxiliertes und/oder propoxiliertes Trimethylolpropan, Glycerin und/oder Hexandiol-1,6 können eingesetzt werden.

Weiterhin können Di-, Tri- und/oder Polyamine mit primären und/oder sekundären Aminogruppen eingesetzt werden. Beispiele sind Ethylendiamin, 1,3-Propylendiamin, 1,6-Hexamethylendiamin, Isophorondiamin, 4,4'-Diaminodicyclohexylmethan oder Hydrazin.

Auch Gemische von Aminen und Alkoholen sind möglich, ebenso gemischt-funktionelle Verbindungen, wie z.B. N-Methylethanol- oder N-Methylisopropanolamin, 1-Amino-propanol oder Diethanolamin. Ebenfalls möglich sind Thiolgruppenhaltige Verbindungen wie z.B. 1,2-Hydroxyethanthiol oder 1-Aminopropanthiol.

Beispiel für in e) eingesetzte Neutralisationsmittel sind basische Verbindungen wie Natriumhydroxid, Kaliumhydroxid, Triethylamin, N,N-Dimethyl-aminoethanol, Dimethyl-cyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol, Ammoniak oder deren Gemische. Bevorzugte Neutralisationsmittel sind tert. Amine wie Triethylamin, Diisopropylhexylamin und N,N-Dimethylethanolamin, besonders bevorzugt ist N,N-Dimethylethanolamin.

Die Menge des eingesetzten Neutralisationsmittels wird im Allgemeinen so bemessen, dass der Neutralisationsgrad der in den Polyisocyanat-Teilchen vorhandenen Carbonsäuregruppen (molares Verhältnis von eingesetztem Amin/Hydroxid zu vorhandenen Säuregruppen) mindestens 40 %, bevorzugt 70 % bis 130 %, besonders bevorzugt 90 bis 110 % beträgt. Die Neutralisation kann dabei vor, während oder nach dem Dispergier- bzw. Löseschritt erfolgen. Bevorzugt ist jedoch die Neutralisation vor der Wasserzugabe.

Es ist ebenfalls möglich, dem Reaktionsgemisch Katalysatoren zuzusetzen. Geeignete Katalysatoren sind beispielsweise tertiäre Amine, Zinn-, Zink- oder Wismuthverbindungen oder basische Salze. Bevorzugt sind Dibutylzinndilaurat und Dibutylzinnoctoat.

Die Polyurethan-Polyharnstoff-Teilchen des Grobanteils [G] sind bevorzugt Carboxyl- und Hydroxylgruppen enthaltenden Polyesterpolyurethanen. Diese werden nach einem Verfahren hergestellt, bei welchem in einem ersten Schritt (I)
- ein ionisch hydrophiliertes, Hydroxyl- oder Isocyanatendgruppen-haltiges Prepolymer durch Umsetzung von
- einem oder mehreren Polyisocyanaten (A1) mit einer NCO-Funktionalität von ≥ 2,
- mindestens einer Hydroxycarbonsäure (C'), bevorzugt Dimethylolpropionsäure,
- gegebenenfalls einer weiteren Polyolkomponente (B1) mit einer Hydroxylgruppen-Funktionalität von ≥ 2 und einem Molekulargewicht Mₙ von 62 bis 500 Da, bevorzugt 62 bis 400 Da, besonders bevorzugt 62 bis 300 Da,
hergestellt wird, in einem zweiten Schritt (II) mit
- einer oder mehrerer Polyolkomponenten (B2) mit einer Hydroxylgruppen-Funktionalität von ≥ 1,
- mindestens einer Polyolkomponente (B3) mit einer mittleren Hydroxylgruppen Funktionalität von ≥ 2 und einem Molekulargewicht Mₙ von 500 bis 5000 Da, bevorzugt 500 bis 3000 Da, besonders bevorzugt 500 bis 2000 Da,
- einem oder mehreren thermisch abspaltbaren Blockierungsmittel (Y) sowie
- gegebenenfalls Polyisocyanaten (A1) mit einer NCO-Funktionalität von ≥ 2
umgesetzt wird und dieses Präpolymer anschließend durch Umsetzung (III) mit
- mindestens einer Hydroxycarbonsäure (C"), bevorzugt Hydroxypivalinsäure sowie
- Polyisocyanaten (A1) mit einer NCO-Funktionalität von ≥ 2
in ein Isocyanatgruppen-freies und Hydroxylgruppen-funktionelles Polyurethanpolymer überführt wird, welches zur vollständigen oder teilweisen Neutralisation mit einem Neutralisierungsmittel (N) versetzt wird.

Im Verfahren ist das Verhältnis der Isocyanatgruppen, einschließlich der Uretdiongruppen, zu allen gegenüber Isocyanatgruppen reaktionsfähigen Gruppen von 0,5 bis 5,0 zu 1, bevorzugt 0,6 bis 2,0 zu 1, besonders bevorzugt 0,8 bis 1,5 zu 1 einzuhalten.

Geeignete Polyisocyanatkomponenten (A1) sind aliphatische, cycloaliphatische, araliphatische und/oder aromatische Isocyanate mit einer mittleren Funktionalität von 2 bis 5, bevorzugt 2 und mit einem Isocyanatgehalt von 0,5 bis 60 Gew.-%, bevorzugt von 3 bis 40 Gew.-%, besonders bevorzugt von 5 bis 30 Gew.-%, wie z.B. Tetramethylen-diisocyanat, Cyclohexan-1,3- und 1,4-diisocyanat, Hexamethylendiisocyanat (HDI), 1-Isocyanato-3,3,5-trimethyl-5-isocyanatomethylcyclohexan (Isophorondiisocyanat IPDI), Methylen-bis-(4-isocyantocyclohexan), Tetramethylxylylendiisocyanat (TMXDI), Triisocyanatononan, Toluylendiisocyanat (TDI), Diphenylmethan-2,4'- und/oder -4,4'-diisocyanat (MDI), Triphenylmethan-4,4'-diisocyanat oder Naphthylen-1,5-diisocyanat sowie beliebige Gemische derartiger Isocyanate. Bevorzugt sind Isophorondiisocyanat, Bis-(4,4-isocyanato-cyclohexylmethan) oder Hexamethylendiisocyanat.

Weiterhin geeignet sind niedermolekulare, Urethangruppen enthaltende Polyisocyanate, wie sie durch Umsetzung von im Überschuss eingesetztem IPDI oder TDI mit einfachen mehrwertigen Alkoholen des Molekulargewichtsbereiches 62 bis 300, insbesondere mit Trimethylolpropan oder Glycerin, erhalten werden können.

Geeignete Polyisocyanate (A1) sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanatgruppen zu gegenüber NCO reaktiven Wasserstoffatomen 1,05:1 bis 10:1, bevorzugt 1,5:1 bis 4:1, wobei die Wasserstoffatome bevorzugt aus Hydroxylgruppen stammen. Die Art und Mengenverhältnisse der bei der Herstellung von NCO-Prepolymeren eingesetzten Ausgangsmaterialien werden so gewählt, dass die NCO-Prepolymeren bevorzugt eine mittlere NCO-Funktionalität von 2 bis 3 und ein Zahlenmittel der Molmasse von 500 bis 10000, bevorzugt 800 bis 4000 aufweisen.

Die Polyolkomponente (B1) enthält 2- bis 6-wertige Polyolkomponenten des Molekulargewichts Mₙ von 62 bis 500 Da, bevorzugt 62 bis 400 Da, besonders bevorzugt 62 bis 300 Da. Bevorzugte Polyolkomponenten (B1) sind beispielsweise 1,4- und/oder 1,3-Butandiol, 1,6-Hexandiol, 2,2,4-Trimethyl-1,3-pentandiol, Trimethylolpropan, Polyester- und/oder Polyetherpolyole des mittleren Molgewichts Mₙ von kleiner oder gleich 500 Da.

Geeignete säurefunktionelle Verbindungen (C')/(C") sind hydroxyfunktionelle Carbonsäuren, bevorzugt Mono- und Dihydroxycarbonsäuren, wie z.B. 2-Hydroxyessigsäure, 3-Hydroxypropansäure oder 12-Hydroxy-9-octadecansäure (Rizinolsäure), Hydroxypivalinsäure, Milchsäure, Dimethylolbuttersäure und/oder Dimethylolpropionsäure. Bevorzugt sind Hydroxypivalinsäure, Milchsäure und/oder Dimethylolpropionsäure. (C') ist bevorzugt Dimethylolpropionsäure, (C") ist bevorzugt Hydroxypivalinsäure.

Falls die Komponente (B1) anteilig in Schritt (I) mitverwendet wird, beträgt ihr Anteil jedoch maximal 50 Gew.-%, bezogen auf die Summe der Komponenten (C) und (B1). Bevorzugt wird in Schritt (I) ausschließlich Komponente (C) eingesetzt.

Die Polyolkomponente (B2) ist ausgewählt aus der Gruppe der
b1) 2- bis 6-wertigen Alkohole mit mittleren Molgewichten Mₙ von 62 bis 300 Da, bevorzugt von 62 bis 182 Da, besonders bevorzugt von 62 bis 118 Da,
b2) linearen, difunktionellen Polyole mit mittleren Molgewichten Mₙ von 350 bis 4000 Da, bevorzugt von 350 bis 2000 Da, besonders bevorzugt von 350 bis 1000 Da,
b3) monofunktionellen linearen Polyether mit mittleren Molgewichten Mₙ von 350 bis 2500 Da, bevorzugt von 500 bis 1000 Da.

Als Polyolkomponente (b1) kommen 2- bis 6-wertige Alkohole und/oder deren Gemische in Betracht, die keine Ester-Gruppen aufweisen. Typische Beispiele sind Ethandiol-1,2, Propandiol-1,2 und -1,3, Butandiol-1,4, -1,2 oder 2,3-Hexandiol-1,6, 1,4-Dihydroxycyclohexan, Glycerin, Trimethylolethan, Trimethylolpropan, Pentaerythrit und Sorbit. Selbstverständlich können als Komponente b1) auch Alkohole mit ionischen oder in ionische Gruppen überführbare Gruppen eingesetzt werden. Bevorzugt sind beispielsweise 1,4- oder 1,3-Butandiol, 1,6-Hexandiol oder Trimethylolpropan sowie deren Mischungen.

Geeignete lineare difunktionelle Polyole (b2) sind ausgewählt aus der Gruppe der Polyether, Polyester und/oder Polycarbonate. Bevorzugt enthält die Polyol-Komponente (b2) mindestens ein Estergruppen enthaltendes Diol des Molekulargewichts Mₙ von 350 bis 4000 Da, bevorzugt von 350 bis 2000 Da, besonders bevorzugt von 350 bis 1000 Da. Es handelt sich hierbei um das mittlere, aus der Hydroxylzahl berechenbare Molekulargewicht. Im Allgemeinen handelt es sich bei den Esterdiolen um Gemische, in denen in untergeordneten Mengen auch einzelne Bestandteile vorliegen können, die ein unter- oder oberhalb dieser Grenzen liegendes Molekulargewicht aufweisen. Es handelt sich um die an sich bekannten Polyesterdiole, die aus Diolen und Dicarbonsäuren aufgebaut sind.

Geeignete Diole sind beispielsweise 1,4-Dimethylol-cyclohexan, 1,4- oder 1,3-Butandiol, 1,6-Hexandiol, Neopentylglykol, 2,2,4-Trimethyl-1,3-pentandiol, Trimethylolpropan sowie Pentaerythrit bzw. Gemische derartiger Diole. Geeignete Dicarbonsäuren sind beispielsweise aromatische Dicarbonsäuren wie Phthalsäure, Isophthalsäure und Terephthalsäure, cycloaliphatische Dicarbonsäuren wie z.B. Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Polyesterdiole auf Basis von Adipinsäure, Phthalsäure, Isophthalsäure und Tetrahydrophthalsäure werden bevorzugt als Komponente (b2) verwendet. Als bevorzugte Diole werden beispielsweise 1,4- oder 1,3-Butandiol, 1,6-Hexandiol oder Trimethylolpropan sowie deren Mischungen eingesetzt.

Besonders bevorzugt als Komponente (b2) werden jedoch Polycaprolactondiole des mittleren Molekulargewichts von 350 bis 4000 Da, bevorzugt von 350 bis 2000 Da, besonders bevorzugt von 350 bis 1000 Da eingesetzt, die in an sich bekannter Weise aus einem Diol oder Diolgemisch der oben beispielhaft genannten Art als Starter und ε-Caprolacton hergestellt worden sind. Das bevorzugte Startermolekül ist hierbei 1,6-Hexandiol. Ganz besonders bevorzugt sind solche Polycaprolactondiole, die durch Polymerisation von ε-Caprolacton unter Verwendung von 1,6-Hexandiol als Starter hergestellt worden sind.

Als lineare Polyolkomponente (b2) können auch (Co)polyether aus Ethylenoxid, Propylenoxid und/oder Tetrahydrofuran eingesetzt werden. Bevorzugt sind Polyether mit einem mittleren Molgewicht Mₙ von 500 bis 2000 Da, wie z.B. Polyethylenoxide oder Polytetrahydrofurandiole.

Geeignet als (b2) sind auch hydroxylgruppenhaltige Polycarbonate, bevorzugt mittleren Molgewichts Mₙ von 400 bis 4000 Da, bevorzugt 400 bis 2000 Da wie z.B. Hexandiolpolycarbonat sowie Polyestercarbonate.

Geeignete monofunktionelle lineare Polyether (b3) sind z.B. (Co)polyether aus Ethylenoxid und/oder Propylenoxid. Bevorzugt sind Monoalkohol-gestartete Polyalkylenoxid-polyether mittleren Molgewichts Mₙ von 350 bis 2500 Da mit mindestens 70 % Ethylenoxid-Einheiten. Besonders bevorzugt sind (Co)polymere mit mehr als 75 % Ethylenoxideinheiten und einem Molgewicht Mₙ von 350 bis 2500 Da, bevorzugt von 500 bis 1000 Da. Als Startermoleküle bei der Herstellung dieser Polyether werden bevorzugt monofunktionelle Alkohole mit 1 bis 6 Kohlenstoffatomen eingesetzt.

Geeignete Polyole (B3) sind verzweigte Polyole mit einer OH-Funktionalität größer oder gleich 2, und mit mittleren Molgewichten von 500 bis 5000 Da, bevorzugt von 500 bis 3000 Da, besonders bevorzugt von 500 bis 2000 Da.

Bevorzugte Polyole (B3) sind z.B. Polyether mittleren Molgewichts von 300 bis 2000 Da und einer mittleren Funktionalität von 2,5 bis 4 OH-Gruppen/Molekül. Ebenfalls bevorzugt sind Polyester mittlerer OH-Funktionalität von 2,5 bis 4,0. Geeignete Diole und Dicarbonsäuren für die Polyester sind die unter der Komponente (b2) genannten, jedoch enthalten sie zusätzlich tri- bis hexafunktionellen kurzkettige Polyole, wie z.B. Trimethylolpropan, Pentaerythrit oder Sorbit. Es ist bevorzugt Polyesterpolyole auf Basis von Adipinsäure, Phthalsäure, Isophthalsäure und Tetrahydrophthalsäure sowie Butandiol-1,4 und Hexandiol-1,6 einzusetzen.

Ebenfalls geeignet als Komponente (B3) sind (Co)polyether aus Ethylenoxid, Propylenoxid und/oder Tetrahydrofuran mittlerer Funktionalität von größer oder gleich 2, ebenso wie verzweigte Polycarbonate.

Das erfindungsgemäße Verfahren sollte so durchgeführt werden, dass bei der Umsetzung der Komponenten (A) und (B1) gemäß der theoretischen stöchiometrischen Gleichung möglichst wenig an nicht umgesetzten Überschusskomponenten (A) und/oder (B1) vorliegt.

Geeignete Blockierungsmittel (Y) sind beispielsweise ε-Caprolactam, Malonsäurediethylester, Acetessigsäureethylester, Oxime wie z.B. Butanonoxim, Amine wie z.B. N,N-Diisopropylamin oder N,N-tert.-Butylbenzylamin, Esteramine wie Alkylalaninester, Dimethylpyrazol, Triazol bzw. Gemische und ggf. auch weitere Blockierungsmittel. Bevorzugt sind Butanonoxim, Diisopropylamin, 3,5-Dimethylpyrazol, N-tert.-Butylbenzylamin und deren Gemische, besonders bevorzugt ist Butanonoxim.

Bevorzugt ist ein Verfahren zur Herstellung der Polyurethan-Polyharnstoff-Teilchen des Grobanteils [G] bei welchem in Schritt (I) die Komponenten zu einem NCO-funktionellen Prepolymeren umgesetzt werden.

Zur Regulierung der Viskosität können dem Reaktionsgemisch bei der Herstellung der Polyesterpolyurethane gegebenenfalls auch Lösungsmittel zugegeben werden. Geeignet sind alle bekannten Lacklösemittel wie z.B. N-Methylpyrrolidon, Methoxypropylacetat oder Xylol. Bevorzugt werden sie in Mengen von 0 bis 10 Gew.-%, besonders bevorzugt in 0 bis 5 Gew.-% eingesetzt. Das Lösungsmittel wird bevorzugt während der Polymerisation zugegeben.

Es ist auch möglich, ein wasser(teil)mischbares Lösemittels wie Aceton oder Methylethylketon dem Reaktionsgemisch zuzugeben. Nach Abschluss der Reaktion wird Wasser dem Reaktionsgemisch zugefügt und das Lösungsmittel abdestilliert. Dies wird auch als Aceton- bzw. Slurry-Verfahren bezeichnet. Der Vorteil dieser Verfahrensweise liegt im geringen Anteil des Lösemittels in der fertigen Dispersion.

Es ist ebenfalls möglich, Katalysatoren dem Reaktionsgemisch zuzusetzen. Bevorzugt sind Metallkatalysatoren wie Dibutylzinndilaurat und Dibutylzinnoctoat.

Ebenfalls Gegenstand der vorliegenden Erfindung ist ein Verfahren zur Herstellung der erfindungsgemäßen wässrigen 1K-Polyurethan-Dispersionen, dadurch gekennzeichnet, dass die Polyurethan-Polyharnstoff-Teilchen des Grobanteils [G] mit Wasser und der mit der feinteiligen Dispersion [F] dispergiert werden, wobei das Gewichtsverhältnis aus Wasser und feinteiliger Dispersion [F] zwischen 1/1 und 1/20, bevorzugt zwischen 1/2 und 1/10 liegt.

Im erfindungsgemäßen Verfahren kann die feinteilige Dispersion [F] vor, während oder nach der Zugabe des restlichen Wassers zugesetzt werden. Auch eine vorherige Vermischung der feinteiligen Dispersion [F] mit dem Wasser ist möglich.

Prinzipiell kann auch erst den Grobteil hergestellt und mit Wasser dispergiert werden und diese Dispersion dann auf das Prepolymer des Feinteils gegeben werden. Diese Vorgehensweise ist aber weniger bevorzugt.

Der bevorzugte Temperaturbereich für das erfindungsgemäße Verfahren liegt zwischen 10 und 90°C, bevorzugt zwischen 20 und 70°C.

Die in den Polyurethan-Teilchen (II) vorhandenen Carbonsäuregruppen werden zu mindestens 50 %, bevorzugt 80 % bis 120 %, besonders bevorzugt 95 bis 105 % mit geeigneten Neutralisationsmitteln neutralisiert und anschließend mit entionisiertem Wasser dispergiert. Die Neutralisation kann vor, während oder nach dem Dispergier- bzw. Löseschritt erfolgen. Bevorzugt ist jedoch die Neutralisation vor der Wasserzugabe.

Geeignete Neutralisationsmittel (N) sind beispielsweise Triethylamin, Dimethylaminoethanol, Dimethylcyclohexylamin, Triethanolamin, Methyldiethanolamin, Diisopropanolamin, Diiso-propylcyclohexylamin, N-Methylmorpholin, 2-Amino-2-methyl-1-propanol, Ammoniak oder andere gebräuchliche Neutralisationsmittel oder deren Neutralisationsgemische. Bevorzugt sind tertiäre Amine wie z.B. Triethylamin, Diisopropylhexylamin, besonders bevorzugt ist Dimethylethanolamin.

Ebenfalls Gegenstand der vorliegenden Erfindung sind Einbrennlacke enthaltend die erfindungsgemäßen wässrigen, selbstvernetzende Einkomponenten(1K)-Polyurethan-Dispersionen. Diese können neben den Teilchen des Fein- und Grobanteils auch noch Hilfs- und Zusatzmittel enthalten.

Bei den gegebenenfalls mitzuverwendenden Hilfs- und Zusatzmitteln handelt es sich beispielsweise um Pigmente, wie z.B. Titandioxid-, Eisenoxid-, Bleioxid-, Zinkoxid-Pigmente, Füllstoffe wie beispielsweise Erdalkalisilikate, Ruß (der auch die Funktion eines Pigments übernehmen kann), Talk, Graphit, organische Farbstoffe, Verlaufhilfsmittel, Antischaum-mittel, UV-Absorber, Antiabsetzmittel, Verdickungsmittel, Netzmittel, Antioxidantien, Hautverhinderungsmittel oder Vernetzungskatalysatoren.

Gegenstand der Erfindung ist auch die Verwendung der erfindungsgemäßen Dispersionen zur Herstellung von Farben, Lacken, Dichtstoffen oder Klebstoffen.

Die wässrigen Einkomponenten-Beschichtungsmittel, enthaltend die erfindungsgemäßen Polyurethan-Dispersionen, können nach allen beliebigen Methoden der Beschichtungstechnologie wie Spritzen, Streichen, Tauchen, Fluten oder mit Hilfe von Walzen und Rakeln auf beliebige hitzeresistente Substrate ein- oder mehrschichtig aufgetragen werden. Die Lackfilme haben im Allgemeinen eine Trockenschichtdicke von 0,01 bis 0,3 mm.

Geeignete Substrate sind beispielsweise Metall, Kunststoff, Holz oder Glas. Die Aushärtung des Lackfilmes findet bei 80 bis 220°C, bevorzugt bei 130 bis 260°C statt.

Die wässrigen Einkomponenten-Beschichtungsmittel, enthaltend die erfindungsgemäßen Polyurethan-Dispersionen, eignen sich bevorzugt zur Herstellung von Überzügen und Lackierungen auf Stahlblechen, wie sie beispielsweise zur Herstellung von Fahrzeugkarosserien, Maschinen, Verkleidungen, Fässern oder Containern Verwendung finden. Besonders bevorzugt ist die Verwendung der wässrigen Einkomponenten-Beschichtungsmittel, enthaltend die erfindungsgemäßen Polyurethan-Dispersionen, für die Herstellung von Automobilfüllern und/oder Decklacken.

Die nachfolgenden Beispiele erläutern näher die Erfindung.

### Beispiele:

Sofern nicht abweichend vermerkt, beziehen sich alle Prozentangaben auf Gewichtsprozent.

Sofern nicht abweichend vermerkt, beziehen sich alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrellationsspektroskopie (Gerät: Malvern Zetasizer 1000, Malver Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe Festkörpergehalt berechnet.

Die Kontrolle auf freie NCO-Gruppen wurde mittels IR-Spektroskopie (Bande bei 2260 cm⁻¹) durchgeführt.

### Chemikalien:

### Desmodur® N 3300 :

Isocyanurat auf Basis von Hexamethylendiisocyanat, Bayer MaterialSeience AG, Leverkusen, DE.

### Desmodur® Z 4470 M/X:

Aliphatisches Polyisocyanat auf Basis von Isophorondiisocyanat 70% ig gelöst in einer Mischung aus Methoxypropylacetat und Xylol (1/1), Isocyanatgehalt ca. 12 %,Bayer MaterialScience AG, Leverkusen, DE.

### Additol® XW 395:

Verlaufshilfsmittel/Entschäumer, UCB Chemicals, St. Louis, USA.

### Surfynol® 104

Verlaufshilfsmittel/Entschäumer, Air Products, Hattingen, DE.

### Beispiel 1: Dispersion kleiner Teilchen (Feinanteil)

343,20 g Desmodur® N 3300 (Bayer AG, Leverkusen) wurden bei 70°C mit 9,45 g 1,6-Hexandiol und nach 5 Minuten mit einer Lösung von 47,20 g Hydroxypivalinsäure in 76,16 g N-Methylpyrrolidon (Zutropfen während 2 Stunden) und vermischt und anschließend bei 70°C gerührt, bis ein konstanter NCO-Wert von 9,62 % (ber. 10,59 %) erreicht wurde (ca. 30 Minuten nach Zugabe der Hydroxypivalinsäure-Lösung). Dann wurden 94,66 g Butanonoxim innerhalb von 30 Minuten zugegeben weiter bei 70°C gerührt, bis IR-spektroskopisch keine NCO-Gruppen mehr nachweisbar waren (ca. 30 Minuten). Anschließend wurden 39,22 g Dimethylethanolamin zugegeben, 10 Minuten nachgerührt und anschließend mit724,44 g entionisiertem Wasser von 70°C dispergiert. Es wurde auf 50°C abgekühlt, 1 Stunde gerührt und unter Rühren auf Raumtemperatur abkühlen gelassen (ca. 4 Stunden).

Die erhaltene Dispersion besaß nachfolgende Eigenschaften:

| | |
|---|---|
| Feststoffgehalt | 36,5% |
| pH-Wert | 9,45 |
| Viskosität (Haake Rotationsviskosimeter, 23°C) | 418 mPas |
| Partikelgröße (Laserkorrelationsspektroskopie, LKS) | 21 nm |

### Beispiel 2:

### Vergleichsbeispiel, mehr als 10% Feinanteil (10,8% kleine Teilchen) → keine Erhöhung des Festkörpers

40,24 g Dimethylolpropionsäure wurden in 80,11 g N-Methylpyrrolidon gelöst und zu der Lösung werden bei 85°C unter Rühren 44,21 g Isophorondiisocyanat gegeben. Das Gemisch wurde bei 85°C gerührt, bis mittels IR-Spektroskopie keine NCO-Gruppen mehr nachweisbar waren (ca. 8 Stunden). Dann wurden 161,24 g Isophorondiisocyanat, 210,00 g eines Polyesters aus Adipinsäure, 1,6-Hexandiol mittleren Molgewichts von 840, 25,00 g eines monofunktionelle Polyethylenglykol mit einem mittleren Molgewichts von 500 (Pluriol 500, BASF AG, Ludwigshafen) und 108,00 g Desmodur® Z 4470 M/X (Bayer AG, Leverkusen) zugegeben und das Gemisch 3 Stunden bei 85°C gerührt. Der NCO-Wert betrug 6,11 % (ber. 6,28). Danach wurden 43,56 g Butanonoxim und nach weiteren 10 Minuten 318,18 g (1,00 Val OH) eines Polyesters aus Adipinsäure, Isophthalsäure, Trimethylolpropan, Neopentylglykol und Propylenglykol zugefügt. Es wurde weiter bei 85°C gerührt, bis IR-spektroskopisch keine NCO-Gruppen mehr nachweisbar waren (ca. 16 Stunden) und anschließend mit einer Lösung von 23,60 g Hydroxypivalinsäure in 37,74 g N-Methylpyrrolidon und mit 144,00 g Desmodur® Z 4470 M/X (Bayer AG, Leverkusen) versetzt. Nach ca. 3 Stunden waren IR-spektroskopisch keine NCO-Gruppen mehr nachweisbar, dann wurde die Mischung auf 80°C abgekühlt und dann 44,57 g Dimethylethanolamin zugegeben, 10 Minuten nachgerührt. Es wird mit 331,58 g der Dispersion aus Beispiel 1 und anschließend 784,04 g entionisiertem Wasser von 50°C dispergiert. Es wurde auf 50°C abgekühlt, 1 Stunde gerührt und unter Rühren auf Raumtemperatur abkühlen gelassen (ca. 4 Stunden).

Die erhaltene Dispersion besaß nachfolgende Eigenschaften:

| | |
|---|---|
| Feststoffgehalt | 47,8 % |
| pH-Wert | 7,78 |
| Viskosität (Haake Rotationsviskosimeter, 23°C) | 4480 mPas |
| Partikelgröße (Laserkorrelationsspektroskopie, LKS) | 51 nm |

### Beispiel 3:

### Erfindungsgemäße Dispersion, weniger als 10% Feinanteil (3,8 % kleine Teilchen) → Erhöhung des Festkörpers

40,24 g Dimethylolpropionsäure wurden in 80,11 g N-Methylpyrrolidon gelöst und zu der Lösung werden bei 85°C unter Rühren 44,21 g Isophorondiisocyanat gegeben. Das Gemisch wurde bei 85°C gerührt, bis mittels IR-Spektroskopie keine NCO-Gruppen mehr nachweisbar waren (ca. 8 Stunden). Dann wurden 161,24 g Isophorondiisocyanat, 210,00 g eines Polyesters aus Adipinsäure, 1,6-Hexandiol mittleren Molgewichts von 840, 25,00 g eines monofunktionelle Polyethylenglykol mit einem mittleren Molgewichts von 500 (Pluriol 500, BASF AG, Ludwigshafen) und 108,00 g Desmodur® Z 4470 M/X (Bayer AG, Leverkusen) zugegeben und das Gemisch 3 Stunden bei 85°C gerührt. Der NCO-Wert betrug 6,11 % (ber. 6,28). Danach wurden 60,98 g Butanonoxim und nach weiteren 10 Minuten 318,18 g (1,00 Val OH) eines Polyesters aus Adipinsäure, Isophthalsäure, Trimethylolpropan, Neopentylglykol und Propylenglykol zugefügt. Es wurde weiter bei 85°C gerührt, bis IR-spektroskopisch keine NCO-Gruppen mehr nachweisbar waren (ca. 16 Stunden) und anschließend mit einer Lösung von 23,60 g Hydroxypivalinsäure in 37,74 g N-Methylpyrrolidon und mit 144,00 g Desmodur® Z 4470 M/X (Bayer AG, Leverkusen) versetzt. Nach ca. 3 Stunden waren IR-spektroskopisch keine NCO-Gruppen mehr nachweisbar, dann wurde die Mischung auf 80°C abgekühlt und dann 44,57 g Dimethylethanolamin zugegeben, 10 Minuten nachgerührt. Es wird mit 110,53 g der Dispersion aus Beispiel 1 und anschließend 668,77 g entionisiertem Wasser von 50°C dispergiert. Es wurde auf 50°C abgekühlt, 1 Stunde gerührt und unter Rühren auf Raumtemperatur abkühlen gelassen (ca. 4 Stunden).

Die erhaltene Dispersion besaß nachfolgende Eigenschaften:

| | |
|---|---|
| Feststoffgehalt | 54,66 % |
| pH-Wert | 8,20 |
| Viskosität (Haake Rotationsviskosimeter, 23°C) | 4460 mPas |
| Partikelgröße (Laserkorrelationsspektroskopie, LKS) | 94 nm |

### Beispiel 4:

### Erfindungsgemäße Dispersion, weniger als 10% Feinanteil (4,2 % kleine Teilchen) → Erhöhung des Festkörpers

Es wurde wie in Beispiel 3 beschrieben gearbeitet, jedoch wurde dispergiert mit 122,80 g der Dispersion aus Beispiel 1 und 665,43 g entionisiertem Wasser von 50°C.

Die erhaltene Dispersion besaß nachfolgende Eigenschaften:

| | |
|---|---|
| Feststoffgehalt | 57,20 % |
| pH-Wert | 8,14 |
| Viskosität (Haake Rotationsviskosimeter, 23°C) | 5610 mPas |
| Partikelgröße (Laserkorrelationsspektroskopie, LKS) | 83 nm |

### Beispiel 5:

### Erfindungsgemäße Dispersion, 4,2 % kleine Teilchen, eingestellt auf eine geringere Viskosität zur Ermittlung des resultierenden Festkörpers

Es wurde wie in Beispiel 5 beschrieben gearbeitet, jedoch wurde nach der Dispergierung und dem Nachrühren noch sukessive entionisiertes Wasser zugesetzt, bis eine Viskosität von 1100-1200 mPas erreicht wurde.

Die erhaltene Dispersion besaß nachfolgende Eigenschaften:

| | |
|---|---|
| Feststoffgehalt | 51,80 % |
| pH-Wert | 8,15 |
| Viskosität (Haake Rotationsviskosimeter, 23°C) | 1180 mPas |
| Partikelgröße (Laserkorrelationsspektroskopie, LKS) | 82 nm |

### Beispiel 6:

### Vergleichsbeispiel, monomodale Dispersion mit gleichem Gehalt blockierter Isocyanat-Gruppen, führt zu geringerem Festkörper

40,24 g Dimethylolpropionsäure wurden in 80,11 g N-Methylpyrrolidon gelöst und zu der Lösung werden bei 85°C unter Rühren 44,21 g Isophorondiisocyanat gegeben. Das Gemisch wurde bei 85°C gerührt, bis mittels IR-Spektroskopie keine NCO-Gruppen mehr nachweisbar waren (ca. 8 Stunden). Dann wurden 161,24 g Isophorondiisocyanat, 210,00 g eines Polyesters aus Adipinsäure, 1,6-Hexandiol mittleren Molgewichts von 840, 25,00 g eines monofunktionelle Polyethylenglykol mit einem mittleren Molgewichts von 500 (Pluriol 500, BASF AG, Ludwigshafen) und 108,00 g Desmodur® Z 4470 M/X (Bayer AG, Leverkusen) zugegeben und das Gemisch 3 Stunden bei 85°C gerührt. Der NCO-Wert betrug 6,11 % (ber. 6,28). Danach wurden 69,70 g Butanonoxim und nach weiteren 10 Minuten 318,18 g (1,00 Val OH) eines Polyesters aus Adipinsäure, Isophthalsäure, Trimethylolpropan, Neopentylglykol und Propylenglykol zugefügt. Es wurde weiter bei 85°C gerührt, bis IR-spektroskopisch keine NCO-Gruppen mehr nachweisbar waren (ca. 16 Stunden) und anschließend mit einer Lösung von 23,60 g Hydroxypivalinsäure in 37,74 g N-Methylpyrrolidon und mit 144,00 g Desmodur® Z 4470 M/X (Bayer AG, Leverkusen) versetzt. Nach ca. 3 Stunden waren IR-spektroskopisch keine NCO-Gruppen mehr nachweisbar, dann wurde die Mischung auf 80°C abgekühlt und dann 44,57 g Dimethylethanolamin zugegeben, 10 Minuten nachgerührt und anschließend mit 903,25 g entionisiertem Wasser von 50°C dispergiert. Es wurde auf 50°C abgekühlt, 1 Stunde gerührt und unter Rühren auf Raumtemperatur abkühlen gelassen (ca. 4 Stunden).

Die erhaltene Dispersion besaß nachfolgende Eigenschaften:

| | |
|---|---|
| Feststoffgehalt | 48,64 % |
| Viskosität (Haake Rotationsviskosimeter, 23°C) | 1120 mPas |
| Partikelgröße (Laserkorrelationsspektroskopie, LKS) | 84 nm |

Es zeigte sich, dass bei Einstellung einer Viskosität von 1100-1200 mPas nur ein relativ geringer Festgehalt von unter 50% erreicht wird. Dieser liegt unter dem Festgehalt von ca. 52 %, der unter analogen Bedingungen mit einer bimodal verteilten Dispersion erreicht wird (vgl. Beispiel 5).

### Beispiel 7:

### Vergleichsbeispiel, analog Beispiel 6, jedoch Versuch der Einstellung eines Festkörpergehaltes von 55% mit einer nicht erfindungsgemäßen, monomodale Dispersion mit gleichem Gehalt blockierter Isocyanat-Gruppen

40,24 g Dimethylolpropionsäure wurden in 80,11 g N-Methylpyrrolidon gelöst und zu der Lösung werden bei 85°C unter Rühren 44,21 g Isophorondiisocyanat gegeben. Das Gemisch wurde bei 85°C gerührt, bis mittels IR-Spektroskopie keine NCO-Gruppen mehr nachweisbar waren (ca. 8 Stunden). Dann wurden 161,24 g Isophorondiisocyanat, 210,00 g eines Polyesters aus Adipinsäure, 1,6-Hexandiol mittleren Molgewichts von 840, 25,00 g eines monofunktionelle Polyethylenglykol mit einem mittleren Molgewichts von 500 (Pluriol 500, BASF AG, Ludwigshafen) und 108,00 g Desmodur® Z 4470 M/X (Bayer AG, Leverkusen) zugegeben und das Gemisch 3 Stunden bei 85°C gerührt. Der NCO-Wert betrug 6,11 % (ber. 6,28). Danach wurden 69,70 g Butanonoxim und nach weiteren 10 Minuten 318,18 g (1,00 Val OH) eines Polyesters aus Adipinsäure, Isophthalsäure, Trimethylolpropan, Neopentylglykol und Propylenglykol zugefügt. Es wurde weiter bei 85°C gerührt, bis IR-spektroskopisch keine NCO-Gruppen mehr nachweisbar waren (ca. 16 Stunden) und anschließend mit einer Lösung von 23,60 g Hydroxypivalinsäure in 37,74 g N-Methylpyrrolidon und mit 144,00 g Desmodur® Z 4470 M/X (Bayer AG, Leverkusen) versetzt. Nach ca. 3 Stunden waren IR-spektroskopisch keine NCO-Gruppen mehr nachweisbar, dann wurde die Mischung auf 80°C abgekühlt und dann 44,57 g Dimethylethanolamin zugegeben, 10 Minuten nachgerührt und anschließend mit 636,24 g entionisiertem Wasser von 50°C dispergiert. Dies entspricht der Einstellung einen Festgehaltes von 55%.

Die hochviskose Mischung wurde auf 50°C abgekühlt. Das Rühren bei 50°C war nicht mehr möglich, da sich die Mischung durch die hohe Viskosität am Rührer hoch zog.

Es gelang nicht, einen mit der monomodal verteilten Dispersion Festgehalt von ca. 55% einzustellen. Mit den erfindungsgemäßen bimodal verteilten Dispersionen in den Beispielen 3 und 4 war dies jedoch möglich.

Die anwendungstechnischen Eigenschaften der erfindungsgemäßen Dispersionen gehen aus Tabelle 1 hervor.

Es wurden Klarlacke nachfolgender Zusammensetzung hergestellt. Aus den Klarlacken wurden Filme hergestellt, 10 Min. bei Raumtemperatur getrocknet und anschließend 30 Min. bei 140°C bzw. 160°C eingebrannt. Die erhaltenen Filme wurden anwendungstechnisch beurteilt.

Die Messung der Pendelhärten erfolgte nach der Methode von König entsprechend DIN 53157.

Die Anlösbarkeiten werden beurteilt nach jeweils 1 Minute Einwirkungszeit des Lösemittels, Reihenfolge der Lösungsmittel: Xylol / Methoxypropylacetat / Ethylacetat / Aceton Beurteilung: 0 sehr gut bis 5 schlecht

Ziel ist es, einen Lack mit möglichst hohen Festkörper zu erhalten, bei einen Auslaufzeit (Maß für Viskosität) um 40 Sekunden. Nach dem Einbrennen sollte eine Pendelhärte von 80-130 Sekunden vorliegen und die Anlösbarkeit bei allen Lösemitteln besser als mit der Note 5 beurteilt werden. Das Aussehen des Lackfilmes sollte anhand optischem Beurteilung als in Ordnung (i.O.) eingestuft werden.

**Tabelle 1 (*: erfindungsgemäß)**

| **Lackbeispiel Nr.** | **8** | **9*** | **10*** | **11** |
|---|---|---|---|---|
| **Dispersion aus Beispiel Nr.** | **2** | **3** | **4** | **6** |
| Produkteinwaagen [g] | 150,0 | 153,0 | 150,0 | 150,0 |
| Additol XW 395, Lff. [g] | 1,3 | 1,5 | 0,9⁴ | 1,3 |
| Surfynol 104, 50%ig in NMP [g] | 1,3 | 1,5 | | 1,3 |
| *N,N*-Dimethylethanolamin, 10%ig in Wasser [g] | - | 0,8 | 3,9 | 2,5 |
| dest. Wasser [g] | 21,0 | 24,0 | 28,0 | 16,5 |
| Gesamt [g] | 173,6 | 180,8 | 182,8 | 171,6 |
| Festkörper [%] | 41,3 | 45,4 | 46,9 | 42,5 |
| Auslaufzeit ISO 5 mm [s] | 41 | 37 | 39 | 39 |
| pH-Wert | 8,3 | 8,3 | 8,3 | 8,3 |
| *Einbrennbedingung:* 10 Min. RT+ 30 Min. 140°C | | | | |
| Pendelhärte [s] | 94 | 88 | 97 | 191 |
| Anlösbarkeit 1 min. (0-5) | 4344 | 4444 | 4344 | 4344 |
| Aussehen des Lackfilms⁽¹⁾ | i.O. | i.O. | i.O. | i.O. |
| *Einbrennbedingung:* 10 Min. RT + 30 Min. 160°C | | | | |
| Pendelhärte [s] | 127 | 119 | 111 | 196 |
| Anlösbarkeit 1 Min. (0-5) | 2244 | 3244 | 4344 | 2244 |
| Aussehen des Lackfilms⁽¹⁾ | i. O. | i. O. | i.O. | i.O. |

| | | | | |
|---|---|---|---|---|
| (1) i.O. = in Ordnung, fehlerfrei (2) Einstellung der Viskosität wegen Dilatanz nicht möglich (3) Wegen Zusammenlaufen des Filmes keine Messung möglich (4) Anstelle von Additiol XW 395 wurde Byk 347 (Byk-Chemie, Wessel, DE) eingesetzt | | | | |

Es zeigt sich auch anhand der Lackformulierungen, dass mit den erfindungsgemäßen Dispersionen 3 und 4 ein wesentlich höherer Festkörper in der fertigen Lackformulierung erzielt wird. Die Ziele der Eigenschaften bezüglich der eingebrannten Beschichtung konnten ebenfalls erreichtwerden.

Aus den nicht erfindungsgemäßen Dispersionen 2 (Anteil kleiner Teilchen in der Dispersion >10%) und 6 (monomodale Verteilung der Teilchen in der Dispersion) konnten bei vergleichbarer Viskosität der Lackformulierung nur geringere Festkörperanteile erzielt werden.

## Patentansprüche

1. Wässrige, selbstvernetzende Einkomponenten(1K)-Polyurethan-Dispersionen mit einer bimodalen Teilchengrößenverteilung, die zwei separate Maxima aufweisen, wobei der Feinanteil [F] der Vernetzer-Teilchen im Bereich von 1 bis 100 nm und der Grobanteil [G] der Polyurethan-Polyharnstoff-Teilchen im Bereich von 10 bis 400 nm liegt und das Gewichtsverhältnis zwischen Fein- und Grobanteil zwischen 0,5/99,5 und 10/90 liegt.

2. Wässrige, selbstvernetzende Einkomponenten(1K)-Polyurethan-Dispersionen gemäß Anspruch 1, **dadurch gekennzeichnet, dass** diese einen Festkörpergehalt von 40 bis 70 Gew.-%, aufweisen, wobei die Viskosität der Dispersion zwischen 50 und 20000 mPas (23°C) liegt.

3. Wässrige, selbstvernetzende Einkomponenten(1K)-Polyurethan-Dispersionen gemäß Anspruch 1, **dadurch gekennzeichnet, dass** die Vernetzer-Teilchen des Feinanteils [F] hydrophilierte Polyisocyanate sind.

4. Wässrige, setbstvernetzende Einkomponenten(1K)-Polyurethan-Dispersionen gemäß Anspruch 1, **dadurch gekennzeichnet, dass** die Vernetzer-Teilchen hergestellt werden durch Umsetzung von
a) einer Polyisocyanatkomponente,
b) 50 bis 90 Äquivalent-%, bezogen auf die isocyanatreaktiven Gruppen, eines thermisch abspaltbaren Blockierungsmittels,
c) 10 bis 45 Äquivalent-%, bezogen auf die isocyanatreaktiven Gruppen, einer Hydroxycarbonsäure als Hydrophilierungsmittel und
d) 0 bis 15 Äquivalent-%, bezogen auf die isocyanatreaktiven Gruppen, einer mindestens difunktionellen Kettenverlängerungskomponente,
wobei vor, während oder nach der Dispergierung des Polyurethan-Polymers in Wasser die Carbonsäuregruppen der Hydroxycarbonsäure mit einer Base e) neutralisiert werden.

5. Wässrige, selbstvernetzende Einkomponenten(1K)-Polyurethan-Dispersionen gemäß Anspruch 1, **dadurch gekennzeichnet, dass** die Polyurethan-Polyharnstoff-Teilchen des Grobanteils [G] Carboxyl- und Hydroxylgruppen enthaltenden Polyesterpolyurethane sind.

6. Wässrige, selbstvernetzende Einkomponenten(1K)-Polyurethan-Dispersionen gemäß Anspruch 5, **dadurch gekennzeichnet, dass** die Polyesterpolyurethanen hergestellt werden, in dem in einem ersten Schritt (I)
- ein ionisch hydrophiliertes, Hydroxyl- oder Isocyanatendgruppen-haltiges Prepolymer durch Umsetzung von
- einem oder mehreren Polyisocyanaten (A1) mit einer NCO-Funktionalität von ≥ 2,
- mindestens einer Hydroxycarbonsäure (C'), bevorzugt Dimethylolpropionsäure,
- gegebenenfalls einer weiteren Polyolkomponente (B1) mit einer Hydroxylgruppen-Funktionalität von ≥ 2 und einem Molekulargewicht Mₙ von 62 bis 500 Da, bevorzugt 62 bis 400 Da, besonders bevorzugt 62 bis 300 Da,
hergestellt wird, in einem zweiten Schritt (II) mit
- einer oder mehrerer Polyolkomponenten (B2) mit einer Hydroxylgruppen-Funktionalität von ≥ 1,
- mindestens einer Polyolkomponente (B3) mit einer mittleren Hydroxylgruppen Funktionalität von ≥ 2 und einem Molekulargewicht Mₙ von 500 bis 5000 Da, bevorzugt 500 bis 3000 Da, besonders bevorzugt 500 bis 2000 Da,
- einem oder mehreren thermisch abspaltbaren Blockierungsmittel (Y) sowie
- gegebenenfalls Polyisocyanaten (A1) mit einer NCO-Funktionalität von ≥ 2 umgesetzt wird und dieses Präpolymer anschließend durch Umsetzung (III) mit
- mindestens einer Hydroxycarbonsäure (C"), bevorzugt Hydroxypivalinsäure sowie
- Polyisocyanaten (A1) mit einer NCO-Funktionalität von ≥ 2
in ein Isocyanatgruppen-freies und Hydroxylgruppen-funktionelles Polyurethanpolymer überführt wird, welches zur vollständigen oder teilweisen Neutralisation mit einem Neutralisierungsmittel (N) versetzt wird.

7. Verfahren zur Herstellung der wässrigen Einkomponenten-Polyurethan-Dispersion gemäß Anspruch 1, **dadurch gekennzeichnet, dass** die Polyurethan-Polyharnstoff-Teilchen des Grobanteils [G] mit Wasser und der mit der feinteiligen Dispersion [F] dispergiert werden, wobei das Gewichtsverhältnis aus Wasser und feinteiliger Dispersion [F] zwischen 1/1 und 1/20 liegt.

8. Verfahren gemäß Anspruch 7, **dadurch gekennzeichnet, dass** die in den Polyurethan-Teilchen (II) vorhandenen Carbonsäuregruppen zu mindestens 50 % mit geeigneten Neutralisationsmitteln neutralisiert und anschließend mit entionisiertem Wasser dispergiert werden, wobei die Neutralisation vor, während oder nach dem Dispergierschritt erfolgen kann.

9. Verfahren gemäß Anspruch 8, **dadurch gekennzeichnet, dass** die Neutralisation vor der Wasserzugabe erfolgt.

10. Einbrennlacke enthaltend die wässrigen, selbstvernetzende Einkomponenten(1K)-Polyurethan-Dispersionen gemäß Anspruch 1.

11. Verwendung der wässrigen Einkomponenten-Polyurethan-Dispersion gemäß Anspruch 1 zur Herstellung von Farben, Lacken, Dichtstoffen oder Klebstoffen.

## Claims

1. Aqueous, self-crosslinking one-component (1K) polyurethane dispersions having a bimodal particle size distribution, which have two separate maxima, the fine fraction [F] of the crosslinker particles lying in the range from 1 to 100 nm and the coarse fraction [G] of the polyurethane-polyurea particles lying in the range from 10 to 400 nm, and the weight ratio between fine fraction and coarse fraction lying between 0.5/99.5 and 10/90.

2. Aqueous, self-crosslinking one-component (1K) polyurethane dispersions according to Claim 1, **characterized in that** they have a solids content of 40% to 70% by weight, the viscosity of the dispersion lying between 50 and 20 000 mPas (23°C).

3. Aqueous, self-crosslinking one-component (1K) polyurethane dispersions according to Claim 1, **characterized in that** the crosslinker particles of the fine fraction [F] are hydrophilicized polyisocyanates.

4. Aqueous, self-crosslinking one-component (1K) polyurethane dispersions according to Claim 1, **characterized in that** the crosslinker particles are prepared by reacting
a) a polyisocyanate component,
b) 50 to 90 equivalent-%, based on the isocyanate-reactive groups, of a thermally eliminable blocking agent,
c) 10 to 45 equivalent-%, based on the isocyanate-reactive groups, of a hydroxycarboxylic acid as hydrophilicizing agent and
d) 0 to 15 equivalent-%, based on the isocyanate-reactive groups, of an at least difunctional chain extender component,
the carboxylic acid groups of the hydroxycarboxylic acid being neutralized with a base e) before, during or after the polyurethane polymer is dispersed in water.

5. Aqueous, self-crosslinking one-component (1K) polyurethane dispersions according to Claim 1, **characterized in that** the polyurethane-polyurea particles of the coarse fraction [G] are polyesterpolyurethanes containing carboxyl and hydroxyl groups.

6. Aqueous, self-crosslinking one-component (1K) polyurethane dispersions according to Claim 5, **characterized in that** the polyesterpolyurethanes are prepared by preparing in a first step (I)
- an ionically hydrophilicized prepolymer containing hydroxyl or isocyanate end groups by reacting
- one or more polyisocyanates (A1) having an NCO functionality of ≥ 2,
- at least one hydroxycarboxylic acid (C'), preferably dimethylolpropionic acid,
- optionally a further polyol component (B1) having a hydroxyl group functionality of ≥ 2 and a molecular weight Mₙ of 62 to 500 Da, preferably 62 to 400 Da, more preferably 62 to 300 Da,
reacting the product of step (I) in a second step (II) with
- one or more polyol components (B2) having a hydroxyl group functionality of ≥ 1,
- at least one polyol component (B3) having an average hydroxyl group functionality of ≥ 2 and a molecular weight Mₙ of 500 to 5000 Da, preferably 500 to 3000 Da, more preferably 500 to 2000 Da,
- one or more thermally eliminable blocking agents (Y), and
- optionally polyisocyanates (A1) having an NCO functionality of ≥ 2
and then converting this prepolymer by reaction (III) with
- at least one hydroxycarboxylic acid (C"), preferably hydroxypivalic acid, and
- polyisocyanates (A1) having an NCO functionality of ≥ 2,
into a polyurethane polymer which is free from isocyanate groups but has hydroxyl group functionality and which for full or partial neutralization is admixed with a neutralizing agent (N).

7. Process for preparing the aqueous one-component polyurethane dispersion according to Claim 1, **characterized in that** the polyurethane-polyurea particles of the coarse fraction [G] are dispersed with water and with the fine-particle dispersion [F], the weight ratio of water and fine-particle dispersion [F] lying between 1/1 and 1/20.

8. Process according to Claim 7, **characterized in that** at least 50% of the carboxylic acid groups present in the polyurethane particles (II) are neutralized with suitable neutralizing agents and then dispersed with deionized water, it being possible for the neutralization to take place before, during or after the dispersing step.

9. Process according to Claim 8, **characterized in that** the neutralization takes place before the addition of water.

10. Baking varnishes comprising the aqueous, self-crosslinking one-component (1K) polyurethane dispersions according to Claim 1.

11. Use of the aqueous one-component polyurethane dispersion according to Claim 1 for producing inks, paints, sealants or adhesives.

## Revendications

1. Dispersions aqueuses de polyuréthane monocomposant (1K) autoréticulables, ayant une distribution bimodale de tailles de particules, qui comportent deux maximums distincts, la fraction de fines particules [F] des particules d'agent de réticulation se situant dans la plage de 1 à 100 nm et la fraction de grosses particules [G] des particules de polyuréthane-polyurée se situant dans la plage de 10 à 400 nm et le rapport pondéral entre la fraction de fines particules et la fraction de grosses particules étant compris entre 0,5/99,5 et 10/90.

2. Dispersions aqueuses de polyuréthane monocomposant (1K) autoréticulables selon la revendication 1, **caractérisées en ce qu'**elles présentent une teneur en solides de 40 à 70 % en poids, la viscosité de la dispersion étant comprise entre 50 et 20 000 mPa.s (à 23 °C).

3. Dispersions aqueuses de polyuréthane monocomposant (1K) autoréticulables selon la revendication 1, **caractérisées en ce que** les particules d'agent de réticulation de la fraction de fines particules [F] sont des polyisocyanates rendus hydrophiles.

4. Dispersions aqueuses de polyuréthane monocomposant (1K) autoréticulables selon la revendication 1, **caractérisées en ce que** les particules d'agent de réticulation sont préparées par mise en réaction de
a) un composant polyisocyanate,
b) 50 à 90 % en équivalents, par rapport aux groupes réactifs avec un isocyanate, d'un agent de blocage séparable thermiquement,
c) 10 à 45 % en équivalents, par rapport aux groupes réactifs avec un isocyanate, d'un acide hydroxycarboxylique en tant qu'agent d'hydrophilisation et
d) 0 à 15 % en équivalents, par rapport aux groupes réactifs avec un isocyanate, d'un composant prolongateur de chaîne au moins difonctionnel,
les groupes carboxy de l'acide hydroxycarboxylique étant neutralisés par une base e) avant, pendant ou après la dispersion du polymère-polyuréthane dans de l'eau.

5. Dispersions aqueuses de polyuréthane monocomposant (1K) autoréticulables selon la revendication 1, **caractérisées en ce que** les particules de polyuréthane-polyurée de la fraction de grosses particules [G] sont des polyester-polyuréthanes contenant des groupes carboxy et hydroxy.

6. Dispersions aqueuses de polyuréthane monocomposant (1K) autoréticulables selon la revendication 5, **caractérisées en ce qu'**on prépare les polyester-polyuréthanes en préparant dans une première étape (I)
- un prépolymère contenant des groupes hydroxy ou isocyanate en bout de chaîne, rendu hydrophile par voie ionique, en faisant réagir
- un ou plusieurs polyisocyanates (A1) ayant une fonctionnalité NCO de ≥ 2,
- au moins un acide hydroxycarboxylique (C'), de préférence l'acide diméthylolpropionique,
- éventuellement un autre composant polyol (B1) ayant une fonctionnalité de groupes hydroxy de ≥ 2 et une masse moléculaire Mₙ de 62 à 500 Da, de préférence de 62 à 400 Da, de façon particulièrement préférée de 62 à 300 Da,
puis, dans une deuxième étape (II), en le faisant réagir avec
- un ou plusieurs composants polyol (B2) ayant une fonctionnalité de groupes hydroxy de ≥ 1,
- au moins un composant polyol (B3) ayant une fonctionnalité moyenne de groupes hydroxy de ≥ 2 et une masse moléculaire Mₙ de 500 à 5 000 Da, de préférence de 500 à 3 000 Da, de façon particulièrement préférée de 500 à 2 000 Da,
- un ou plusieurs agents de blocage (Y) séparables thermiquement ainsi que
- éventuellement des polyisocyanates (A1) ayant une fonctionnalité NCO de ≥ 2
et ensuite en convertissant ce prépolymère, par mise en réaction de (III) avec
- au moins un acide hydroxycarboxylique (C"), de préférence l'acide hydroxypivalique, ainsi que
- des polyisocyanates (A1) ayant une fonctionnalité NCO de ≥ 2
en un polymère polyuréthane à fonction de groupes hydroxy et exempt de groupes isocyanate, auquel on ajoute, pour la neutralisation partielle ou totale, un agent de neutralisation (N).

7. Procédé pour la préparation de la dispersion aqueuse de polyuréthane monocomposant selon la revendication 1, **caractérisé en ce qu'**on disperse les particules de la fraction de grosses particules [G] avec de l'eau et avec la dispersion finement divisée [F], le rapport pondéral de l'eau et de la dispersion finement divisée [F] étant compris entre 1/1 et 1/20.

8. Procédé selon la revendication 7, **caractérisé en ce que** les groupes carboxy présents dans les particules de polyuréthane (II) sont neutralisés à raison d'au moins 50 % avec des agents de neutralisation appropriés et ensuite on disperse les particules avec de l'eau désionisée, la neutralisation pouvant s'effectuer avant, pendant ou après l'étape de dispersion.

9. Procédé selon la revendication 8, **caractérisé en ce que** la neutralisation s'effectue avant l'addition d'eau.

10. Peintures à séchage au four, contenant les dispersions aqueuses de polyuréthane (1K) autoréticulables, selon la revendication 1.

11. Utilisation de la dispersion aqueuse de polyuréthane monocomposant selon la revendication 1, pour la production de peintures, vernis, matières d'étanchéité ou adhésifs.
